# EUROPÄISCHE PATENTSCHRIFT

(11) **EP 2 745 337 B1**
(45) Veröffentlichungstag und Bekanntmachung des Hinweises auf die Patenterteilung: **14.09.2016**
(21) Anmeldenummer: 12735141.9
(22) Anmeldetag: 12.07.2012
(51) Int. Cl.: H01M 2/20, H01M 2/22, H01M 10/0525

(54) **ZELLVERBINDER, BATTERIEZELLENMODUL, BATTERIE, VERFAHREN ZUR HERSTELLUNG EINES ZELLVERBINDERS UND KRAFTFAHRZEUG**
CELL CONNECTOR, BATTERY CELL MODULE, BATTERY, METHOD FOR PRODUCING A CELL CONNECTOR, AND MOTOR VEHICLE
BARRETTE POUR ÉLÉMENT DE BATTERIE, MODULE D'ÉLÉMENTS DE BATTERIE, PROCÉDÉ DE PRODUCTION D'UNE BARRETTE ET VÉHICULE AUTOMOBILE

(30) Priorität: 16.08.2011 DE 102011080977
(43) Veröffentlichungstag der Anmeldung: 25.06.2014
(73) Patentinhaber: Robert Bosch GmbH, 70442 Stuttgart (DE); SAMSUNG SDI CO., LTD., Yongin-si, Gyeonggi-do 446-577 (KR)
(72) Erfinder: RUEHLE, Andreas, 70374 Stuttgart (DE)
(74) Vertreter: Bee, Joachim
(86) Internationale Anmeldenummer: PCT/EP2012/063642
(87) Internationale Veröffentlichungsnummer: WO 2013/023846

(56) Entgegenhaltungen:
- DE-A1-102006 015 566
- DE-A1-102009 024 514
- JP-A- 2002 151 045
- JP-A- 2011 040 332

## Beschreibung

Die vorliegende Erfindung betrifft einen Zellverbinder, ein mehrere Zellverbinder umfassendes Batteriezellenmodul, eine Batterie, ein Verfahren zur Herstellung eines erfindungsgemäßen Zellverbinders sowie ein Kraftfahrzeug.

### Stand der Technik

Es besteht ein erheblicher Bedarf an Batterien für breite Anwendungsbereiche, beispielsweise für Fahrzeuge, stationäre Anlagen, wie zum Beispiel Windkraftanlagen, und mobile Elektronikgeräte, wie zum Beispiel Laptops und Kommunikationsgeräte. An diese Batterien werden sehr hohe Anforderungen hinsichtlich Zuverlässigkeit, Lebensdauer und Leistungsfähigkeit gestellt.

Prädestiniert für ein breites Einsatzgebiet von Applikationen ist die Lithium-Ionen-Technologie. Sie zeichnet sich unter anderem durch hohe Energiedichte und eine äußerst geringe Selbstentladung aus.

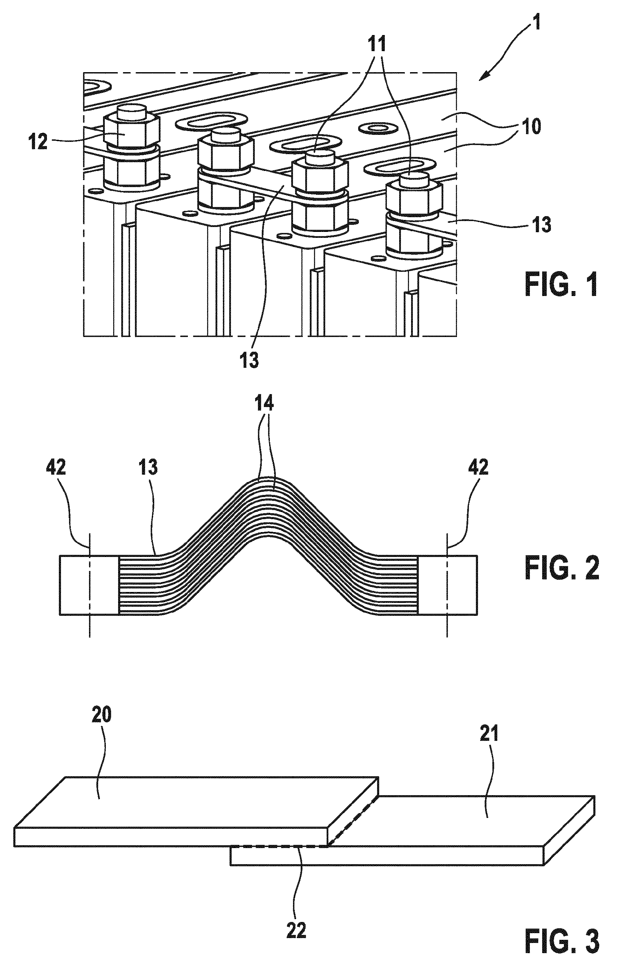

Es ist bekannt, einzelne Batteriezellen in sogenannten Batteriezellenmodulen 1 zusammenzufassen, wie in Figur 1 dargestellt. Beispielsweise sechs Batteriezellen 10 werden dabei verspannt und in Reihe geschaltet. Die Schaltung geschieht an den Terminals 11 der Zellen 10 mit Hilfe von sogenannten Zellverbindern 13 und Muttern 12. Dabei ist einer der Terminals 11 bei einer Lithium-Ionen-Batteriezelle 10 typischerweise aus einem Aluminiumwerkstoff und der andere Anschluss aus einem Kupferwerkstoff. Die Zellen 10 werden über Aluminium- oder Kupferblechstreifen (Zellverbinder 13) miteinander kontaktiert und zu einem Batteriezellenmodul 1 verbunden.

Um eine hohe Lebensdauer der Zellen zu erreichen, werden diese verspannt, um ein Ausdehnen beim Laden (durch Ionen-Einlagerung) zu verhindern. Trotz der Zellverspannung "atmen" die Zellen 10, das heißt, sie verändern in Abhängigkeit vom Ladungszustand und gegebenenfalls in Abhängigkeit von der Temperatur ihr Volumen, wodurch es zur Einbringung von Spannungen in das Batteriezellenmodul 1 kommt.

Um eine Spannungsbelastung der Terminals zu vermeiden, werden Zellverbinder 13 verwendet, die aus mehreren Schichten 14 von Folien bestehen und variabel in der Länge sind, siehe Figur 2.

Diese sind vorzugsweise aus bis zu zwanzig Schichten 14 aus Kupfer hergestellt. Um möglichst geringe Übergangswiderstände an den Kontaktstellen zu erreichen, werden stoffschlüssige Verbindungstechniken bzw. Fügetechniken an den Terminals 13 bevorzugt.

Da Kupfer und Aluminium (Kupfer-Zellverbinder und Aluminium-Terminal) nur schlecht miteinander verschweißt werden können, werden auch kaltwalzplattierte Zellverbinder, wie in Figur 3 dargestellt, verwendet. Hierbei werden Kupferbänder 20 und Aluminium-Bänder 30 mittels Kaltwalzen in einer Fügeebene 22 verbunden. Somit ergibt sich ein Zellverbinder, der auf der einen Seite aus Aluminium, auf der andere Seite aus Kupfer besteht. Dadurch kann nun optimal am jeweiligen Aluminium- bzw. Kupfer-Terminal geschweißt werden. Diese Zellverbinder sind allerdings nicht variabel in der Länge, was zu Spannungen an den Terminals führen kann.

Toleranz- und damit auch Längenschwankungen ausgleichende Zellverbinder sind aus der DE 10 2007 063 177 A1 bekannt, die aus einem elektrisch leitfähigen Material bestehen, mit dem an beiden Enden jeweils ein Ausgleichselement in Form einer Buchse verbunden ist. Die Buchse ist an das elektrisch leitfähige Material angeschweißt. Aufgrund der Kombination der Terminal-Materialien Aluminium und Kupfer an einer Batteriezelle ist demzufolge bei Ausgestaltung der Buchsen mit dem Material des jeweiligen Anschlussterminals trotzdem eine relativ aufwendig zu realisierende Schweißverbindung zwischen Aluminium und Kupfer herzustellen.

Ferner ist aus dem Dokument DE 10 2006 015 566 A1 ein Zellverbinder zur elektrischen Verbindung von Terminals von Batteriezellen bekannt, der mindestens zwei leitende Schichten umfasst. Dabei sind die Schichten mit jeweils zwei Löchern identischer Größe versehen und derartig übereinander angeordnet, dass ein Loch einer Schicht koaxial zum entsprechenden Loch der jeweils anderen Schicht angeordnet ist. Ein solcher Zellverbinder ist auch aus dem Dokument JP 2011 040332 A bekannt.

Weiterhin ist aus dem Dokument DE 10 2009 024 514 A1 ein Zellverbinder zur elektrischen Verbindung von Terminals von Batteriezellen bekannt, der zwei leitende Schichten umfasst, die jeweils derartig ausgebildet sind, dass eine sortenreine stoffschlüssige Verbindung zwischen jeder der zwei Schichten und einem entsprechenden zu kontaktierenden Terminal von zwei unterschiedlichen Terminals der zu verbindenden Batteriezellen realisierbar ist. Ein solcher Zellverbinder ist auch aus dem Dokument JP 2002 151 045 A bekannt.

### Offenbarung der Erfindung

Erfindungsgemäß wird ein Zellverbinder zur elektrischen Verbindung von Terminals von Batteriezellen, insbesondere von Lithium-Ionen-Batteriezellen, zur Verfügung gestellt, der wenigstens eine erste Schicht aus einem ersten Material und eine zweite Schicht aus einem zweiten Material umfasst, wobei das erste Material mit einem ersten Terminal der zwei Terminals von Batteriezellen stoffschlüssig verbindbar ist und das zweite Material mit einem zweiten Terminal der zwei Terminals von Batteriezellen stoffschlüssig verbindbar ist, die beiden Schichten mit jeweils einem kleineren Loch und einem größeren Loch versehen sind und die Schichten derart übereinander angeordnet sind, dass das kleinere Loch einer Schicht im Wesentlichen koaxial zum größeren Loch der jeweils anderen Schicht angeordnet ist und mittels seiner Lochwandungen jeweils die Lochwandungen zur stoffschlüssigen Befestigung des Zellverbinders an dem mit dem Material der Schicht stoffschlüssig verbindbaren Terminal der zwei Terminals ausbildet. Die Koaxialität bezieht sich dabei auf die Längsachsen der jeweiligen Löcher. Mit anderen Worten weist die erste Schicht ein erstes Loch mit einem ersten Durchmesser und ein zweites Loch mit einem zweiten Durchmesser auf, und die zweite Schicht weist ein drittes Loch mit einem dritten Durchmesser und ein viertes Loch mit einem vierten Durchmesser auf. Der erste Durchmesser ist dabei größer als der zweite Durchmesser und der vierte Durchmesser ist größer als der dritte Durchmesser. Die Schichten sind derart übereinander angeordnet, dass sich das erste Loch und das dritte Loch sowie das zweite Loch und das vierte Loch überlagern, so dass der kleinste Durchmesser der einander überlagernden Löcher jeweils durch das das dritte Loch ausbildende zweite Material und durch das das zweite Loch ausbildende erste Material definiert ist. Die beiden Schichten sind dabei bevorzugt aus Folien ausgeführt, wobei das erste Material ein anderes ist als das zweite Material. Das erste Material kann zum Beispiel Aluminium bzw. eine geeignete Aluminiumlegierung sein und das zweite Material kann Kupfer bzw. eine geeignete Kupferlegierung sein. Mit dem Durchmesser ist die geringste lichte Weite des Loches gemeint, wie zum Beispiel bei einem kreisförmigen Loch der geometrische Durchmesser. Der Vorteil des erfindungsgemäßen Zellverbinders liegt insbesondere darin, dass die Lochwandungen zur Befestigung des Zellverbinders an einem Terminal im Wesentlichen aus jeweils nur einem Material ausgebildet sind, so dass der Aluminiumwerkstoff des Zellverbinders in einfacher und bevorzugt stoffschlüssiger Weise mit einem Aluminiumterminal einer Batteriezelle verbunden werden kann und der Kupferwerkstoff des Zellverbinders in einfacher und bevorzugter stoffschlüssiger Weise mit einem Kupferterminal einer anderen Batteriezelle verbunden werden kann. Das stoffschlüssige Verbindungsverfahren ist vorzugsweise ein Schweißverfahren wie zum Beispiel Reibschweißen oder Pressschweißen. Erfindungsgemäß werden somit Zellverbinder bereitgestellt, die optimal an Terminals von Batteriezellen geschweißt werden können und gleichzeitig aufgrund ihrer Mehrschichtigkeit Bewegungen zwischen den Zellen, hervorgerufen durch Volumenänderungen oder Beschleunigungen der Batteriezellen, ausgleichen können.

Vorzugsweise umfasst der Zellverbinder jeweils mehrere Schichten aus dem ersten und zweiten Material. Das heißt, dass der Zellverbinder in bevorzugter Ausführungsform mehrere Schichten aus Aluminium bzw. einer Aluminiumlegierung und mehrere Schichten aus Kupfer bzw. einer Kupferlegierung aufweist.

In einer weiteren vorteilhaften Ausführungsform des Zellverbinders ist vorgesehen, dass in koaxial angeordneten Löchern eine Buchse eingebracht ist, wobei die Buchse mit dem Material, welches das jeweils kleinere Loch ausbildet, stoffschlüssig verbindbar ist und mittels einer stoffschlüssigen Verbindung elektrisch leitfähig verbunden ist. Bei mehreren Schichten aus dem gleichen Material ist die Buchse bevorzugt mit all diesen Schichten, die an der Stelle der Einbringung der Buchse auch denselben Durchmesser aufweisen, verbunden. Vorzugsweise ist dabei die Buchse aus dem gleichen Material wie das das kleinere Loch ausbildende Material oder zumindest aus einem Material, mit welchem in einfacher und zuverlässiger Weise eine stoffschlüssige Verbindung wie zum Beispiel eine Schweißung mit dem jeweiligen Schicht-Material herstellbar ist. Dies hat den Vorteil, dass eine elektrisch sehr gut leitfähige Verbindung zwischen dem jeweiligen Schicht-Material und der Buchse in einfacher und kostengünstiger Weise hergestellt werden kann und die Buchse ebenfalls in einfacher und kostengünstiger Weise zum Beispiel durch Schweißen mit einem Terminal einer Batteriezelle verbunden werden kann. Das heißt, dass an einem Terminal aus Aluminium eine ebenfalls Aluminium-haltige Buchse angeschlossen ist und an die Buchse vorzugsweise stoffschlüssig wenigstens eine Aluminiumschicht des Zellverbinders angeschlossen ist. Der Anschluss an ein Kupfer-Terminal einer Batteriezelle ist demzufolge durch eine Kupfer-Buchse sowie Kupfer-Schichten des Zellverbinders realisiert. Der Stromfluss zwischen den Schichten des Zellverbinders ist durch Anlage der Schichten aneinander realisiert.

Vorzugsweise ist vorgesehen, dass die Buchse mit dem das kleinere Loch ausbildenden Material pressverschweißt ist. Alternativ kann die Buchse auch reibverschweißt sein. Vorteilhafterweise hat die Buchse an wenigstens einem ihrer Enden einen Absatz, der zur Einleitung einer Andruckkraft auf die einzelnen Schichten des Zellverbinders wirken kann und/oder zur Herstellung der Schweißverbindung.

In weiterer bevorzugter Ausgestaltung des Zellverbinders weist dieser zumindest abschnittsweise eine isolierende Ummantelung auf, die bis auf den Bereich der Anschlüsse bzw. der Buchsen die Schichten umgibt. Die Ummantelung kann dabei derart ausgestaltet sein, dass sie form- und/oder kraftschlüssig die einzelnen Schichten zusammendrückt, so dass zwischen diesen der elektrische Kontakt gewährleistet ist.

Es wird somit ein Zellverbinder aus mehreren Schichten in Folienstärke zur Verfügung gestellt, wobei die einzelnen Folien abwechselnd in unterschiedlichen Werkstoffen, wie zum Beispiel in Aluminium und Kupfer bzw. in Aluminium- und Kupferlegierungen, ausgeführt sind. In den kleineren Löchern der Schichten sind Buchsen mit dem Material des Terminals angeordnet, an dem die jeweilige Buchse anzuschließen ist, so dass ein einfaches und kosteneffizientes Verschweißen zwischen der Buchse und dem Terminal ermöglicht wird. Um Korrosion zu verhindern, ist der Zellverbinder mit einer Ummantelung wie zum Beispiel mit einer Kunststoffversiegelung versehen. Der Vorteil des erfindungsgemäßen Zellverbinders liegt insbesondere in der optimierten Schweißbarkeit zwischen der Buchse und den einzelnen Schichten des Zellverbinders sowie zwischen der Buchse und den Terminals sowie aufgrund der Mehrschichtigkeit in der Möglichkeit des Ausgleichs von Zugspannungen und Toleranzen, verbunden mit einem optimalen Korrosionsschutz.

Es wird außerdem erfindungsgemäß ein Batteriezellenmodul zur Verfügung gestellt, welches eine Mehrzahl von Batteriezellen, insbesondere Lithium-Ionen-Batteriezellen sowie wenigstens einen erfindungsgemäßen Zellverbinder umfasst, der Terminals von wenigstens zwei der Batteriezellen elektrisch leitfähig verbindet. Unter einem Terminal wird hierbei der auf die jeweilige Außenseite der Batteriezelle geführte Pol der Batteriezelle verstanden. Dabei ist das das kleinere Loch ausbildende Material des Zellverbinders bevorzugt das gleiche bzw. hinsichtlich einer Schweißung kompatible Material wie das des zu verbindenden Batterieterminals, bevorzugt auch das der an dieses Batterieterminal anzuschließenden Buchse.

Weiterhin wird erfindungsgemäß eine Batterie zur Verfügung gestellt, welche wenigstens ein erfindungsgemäßes Batteriezellenmodul umfasst. Gegebenenfalls kann eine solche Batterie noch weitere Einrichtungen wie zum Beispiel Klimatisierungseinrichtungen aufweisen.

Es wird außerdem ein Verfahren zur Herstellung eines erfindungsgemäßen, zur elektrischen Verbindung von Terminals von Batteriezellen verwendbaren Zellverbinders zur Verfügung gestellt, bei dem eine erste Schicht aus einem ersten Material, das mit einem ersten Terminal der zwei Terminals von Batteriezellen stoffschlüssig verbindbar ist, und eine zweite Schicht aus einem zweiten Material, das mit einem zweiten Terminal der zwei Terminals von Batteriezellen stoffschlüssig verbindbar ist, bereitgestellt werden, die beiden Schichten mit jeweils einem kleineren Loch und einem größeren Loch versehen werden und die Schichten derart übereinander angeordnet werden, dass das kleinere Loch einer Schicht im Wesentlichen koaxial zum größeren Loch der jeweils anderen Schicht angeordnet ist und mittels seiner Lochwandungen die Lochwandungen zur stoffschlüssigen Befestigung des Zellverbinders an dem mit dem Material der Schicht stoffschlüssig verbindbaren Terminal der zwei Terminals ausbildet. Mit anderen Worten werden eine erste Schicht aus einem ersten Material und eine zweite Schicht aus einem zweiten Material bereitgestellt, und die erste Schicht wird mit einem ersten Loch mit einem ersten Durchmesser versehen und mit einem zweiten Loch mit einem zweiten Durchmesser versehen. Die zweite Schicht wird mit einem dritten Loch mit einem dritten Durchmesser versehen und mit einem vierten Loch mit einem vierten Durchmesser versehen. Der erste Durchmesser ist dabei größer als der zweite Durchmesser und der vierte Durchmesser ist dabei größer als der dritte Durchmesser. Die Schichten werden derart übereinander angeordnet, dass sich das erste Loch und das dritte Loch sowie das zweite Loch und das vierte Loch überlagern, so dass der kleinste Durchmesser der einander überlagernden Löcher jeweils durch das das dritte Loch ausbildende zweite Material und durch das das zweite Loch ausbildende erste Material definiert ist.

Das Verfahren kann weiterhin derart durchgeführt werden, dass eine Buchse in koaxial angeordnete Löcher eingebracht wird, wobei die Buchse mit dem Material, welches das jeweils kleinere Loch ausbildet, stoffschlüssig verbindbar ist und mittels einer stoffschlüssigen Verbindung elektrisch leitfähig verbunden wird. Diese elektrisch leitfähige Verbindung kann zum Beispiel durch Reibschweißen oder Pressschweißen realisiert werden. Ein derart hergestellter Zellverbinder kann wiederum in einfacher Weise stoffschlüssig mit einem jeweiligen Batterieterminal verbunden werden, wobei eine Buchse, die mit dem ersten bzw. zweiten Material des Zellverbinders verbunden ist, bevorzugt ebenfalls aus diesem Material besteht und bevorzugt an einem Batterieterminal angeschlossen wird, welches ebenfalls aus dem ersten bzw. zweiten Material besteht, um die Bildung eines elektrochemischen Spannungspotenzials zu vermeiden.

Es wird außerdem ein Kraftfahrzeug zur Verfügung gestellt, welches insbesondere ein elektromotorisch antreibbares Kraftfahrzeug sein kann, und welches wenigstens einen erfindungsgemäßen Zellverbinder und/oder ein erfindungsgemäßes Batteriezellenmodul bzw. eine erfindungsgemäße Batterie umfasst.

### Zeichnungen

Ausführungsbeispiele der Erfindung werden anhand der Zeichnungen und der nachfolgenden Beschreibung näher erläutert. Es zeigen:
Figur 1 einen Teilbereich eines herkömmlichen Batteriezellenmoduls,
Figur 2 einen herkömmlichen Zellverbinder in Ansicht von der Seite,
Figur 3 zwei unterschiedliche Schichtwerkstoffe, die in herkömmlicher Weise mittels Kaltwalzplattieren verbunden sind,
Figur 4 einen erfindungsgemäßen Zellverbinder in Ansicht von der Seite,
Figur 5 einen erfindungsgemäßen Zellverbinder in Ansicht von oben,
Figur 6 einen Abschnitt eines erfindungsgemäßen Zellverbinders mit Buchse in Ansicht von der Seite, und
Figur 7 einen Abschnitt eines erfindungsgemäßen Zellverbinders mit Buchse in perspektivischer Ansicht.

Auf die Figuren 1 bis 3 wurde bereits zur Erläuterung des Standes der Technik eingegangen.

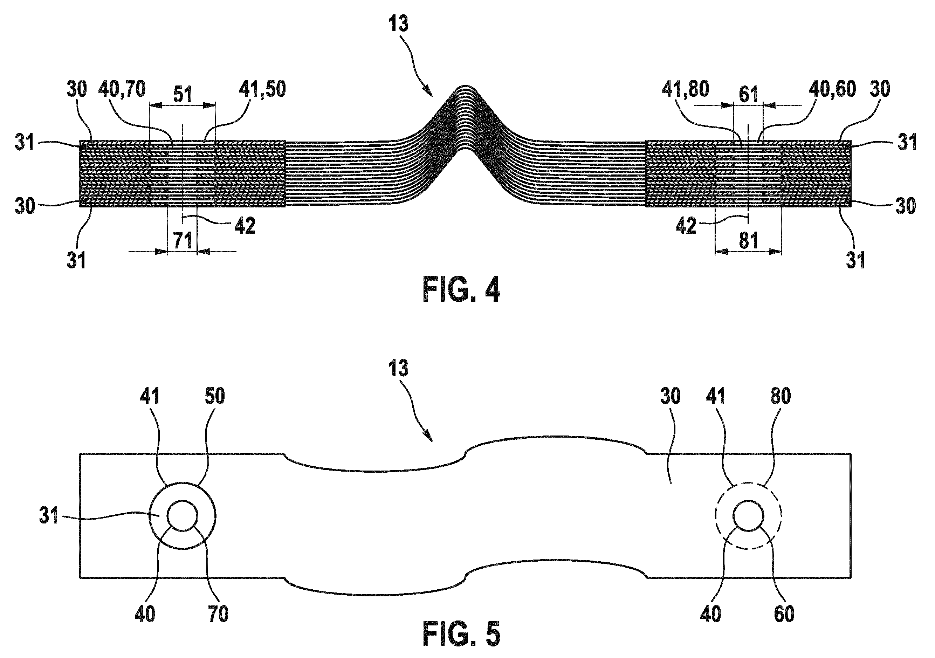

Der erfindungsgemäße Zellverbinder bzw. Einzelheiten davon sind in den Figuren 4 bis 7 dargestellt.

Wie aus Figur 4 ersichtlich ist, umfasst der Zellverbinder 13 mehrere erste Schichten 30 sowie mehrere zweite Schichten 31, die abwechselnd übereinander angeordnet sind. Jede dieser Schichten weist ein kleineres Loch 40 sowie ein größeres Loch 41 auf. Die Längsachsen 42 dieser Löcher 40, 41 liegen im Wesentlichen auf einer Linie. Bevorzugt liegen sie genau auf einer Linie.

Das heißt, dass die erste Schicht 30 ein erstes Loch 50 aufweist, welches einen relativ großen ersten Durchmesser 51 hat. Weiterhin weist die erste Schicht 30 ein zweites Loch 60 auf, welches einen relativ kleinen zweiten Durchmesser 61 hat. Die zweite Schicht 31 weist ein drittes Loch 70 auf, welches einen relativ geringen Durchmesser 71 hat, und weist außerdem ein viertes Loch 80 auf, welches einen relativ großen vierten Durchmesser 81 hat. Der erste Durchmesser 51 kann dabei genauso groß sein wie der vierte Durchmesser 81. Der zweite Durchmesser 61 kann genauso groß sein wie der dritte Durchmesser 71. Dies hat den Vorteil, dass Buchsen mit gleichen Außendurchmessern in die zweite Schicht 31 mit dem dritten Durchmesser 71 sowie in die erste Schicht 30 mit dem zweiten Durchmesser 61 eingesetzt werden können.

Die Erfindung ist jedoch nicht auf gleiche Durchmesser 71 und 61 eingeschränkt, sondern es können die genannten ersten Durchmesser 51, zweiten Durchmesser 61, dritten Durchmesser 71 und vierten Durchmesser 81 jeweils unterschiedlich sein. Ein wesentlicher Aspekt der vorliegenden Erfindung ist, dass die einander überlagernden unterschiedlichen Löcher, wie zum Beispiel das erste Loch 50, sowie das dritte Loch 70 unterschiedliche Durchmesser aufweisen, so dass eine Buchse in diesem Bereich in einfacher und kostengünstiger Weise mit der zweiten Schicht 31 stoffschlüssig zur Realisierung einer elektrisch leitfähigen Verbindung mit geringem Widerstand herstellbar ist. Dabei kontaktiert die Buchse lediglich zweite Schichten 31 und demzufolge nur das Material, aus dem die zweiten Schichten 31 hergestellt sind. Vorzugsweise ist eine dort angeordnete Buchse ebenfalls aus dem Material, aus dem die zweiten Schichten 31 bestehen. Dies ermöglicht eine effiziente Schweißung.

Ebenso sind der zweite Durchmesser 61 des zweiten Loches 60 in der ersten Schicht 30 sowie der vierte Durchmesser 81 des vierten Lochs 80 in der zweiten Schicht 31 derart unterschiedlich ausgeführt, dass eine an dieser Stelle eingefügte Buchse lediglich in Kontakt mit dem Material der ersten Schicht 30 steht, so dass auch hier eine effiziente Schweißung möglich ist. Die an dieser Stelle einzufügende Buchse ist vorzugsweise ebenfalls aus dem Material der ersten Schicht 30 hergestellt.

Es kann dabei vorgesehen sein, dass, wie in Figur 4 angedeutet, die Schichten lediglich im Bereich der einzufügenden Buchsen mit einer relativ großen Schichtdicke ausgestattet sind und in einem zentralen Bereich, der zum Beispiel auch die dargestellte Wölbung haben kann, mit geringeren Schichtdicken ausgestaltet sind.

In Figur 5 ist der in Figur 4 dargestellte Zellverbinder in Ansicht von oben gezeigt. Dabei ist im Wesentlichen nur die erste Schicht 30 erkennbar. Im Bereich der einander überlagernden ersten Löcher 50 und dritten Löcher 70 ist jedoch auch die zweite Schicht 31 erkennbar, die das dritte Loch 70 mit dem relativ geringen dritten Durchmesser 71 ausbildet.

Im Bereich des zweiten Loches 60 ist um dieses herum der Verlauf des vierten Loches 80 mit dem relativ großen vierten Durchmesser 81 angedeutet.

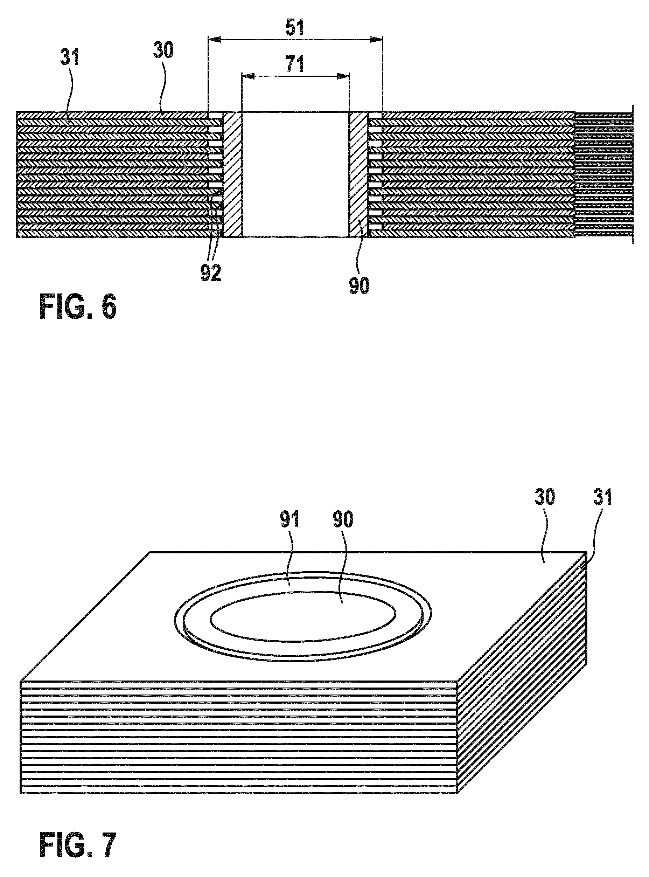

In Figur 6 ist ein Abschnitt eines erfindungsgemäßen Zellverbinders dargestellt, in dem eine Buchse 90 eingesetzt ist. Erkennbar ist, dass die Buchse 90 lediglich an den zweiten Schichten 31 befestigt ist, nämlich mittels Schweißnähten 92. Die Buchse 90 hat keinen direkten Kontakt mit den ersten Schichten 30. Durch die feste Verbindung der Buchse 90 mit einer der Schichten können diese derart positioniert und dadurch zusammengedrückt werden, dass in einfacher Weise elektrisch leitfähige Verbindungen zwischen den ersten Schichten 30 und den zweiten Schichten 31 realisiert werden.

Der erste Durchmesser 51 ist dabei im Verhältnis zum dritten Durchmesser 71 derart dimensioniert, dass trotz Herstellung der Schweißnähte 92, bevorzugt durch Reibschweißen oder Pressschweißen, keine direkte Verbindung zwischen der ersten Schicht 30 und der Buchse 90 hergestellt wird.

Die in Figur 6 dargestellte Buchse 90 ist vorzugsweise aus dem gleichen Material wie das der zweiten Schichten 31 hergestellt, um die Schweißung effizient durchführen zu können. Dieses Material ist vorzugsweise auch das Material des Terminals, an dem die Buchse ebenfalls vorzugsweise stoffschlüssig anzuschließen ist. In einer zu Figur 6 analogen Weise ist selbstverständlich ebenfalls eine Buchse mit den ersten Schichten 30 im zweiten Loch 60 verbindbar, wobei diese Buchse vorzugsweise ebenfalls aus dem Material der ersten Schichten 30 besteht.

In Figur 7 ist ein Abschnitt einer Ausführungsform eines erfindungsgemäßen Zellverbinders gezeigt, bei dem die Buchse 90 einen endseitigen Absatz 91 aufweist. Dieser Absatz ermöglicht in einfacher Weise bei Herstellung des Zellverbinders eine formschlüssige Aufbringung von Anpresskräften auf die Schichten 30, 31, um zumindest im Bereich der Einbringung der Buchse 90 diese aneinanderzudrücken und derart zuverlässig eine elektrische Kontaktierung zwischen den Schichten 30, 31 herbeizuführen.

Dabei berühren sich bei Ausführung der Schichten 30, 31 mit Kupfer- und Aluminium-Werkstoffen zwei Metalle, die ein unterschiedliches elektrochemisches Spannungspotenzial besitzen. Bei Benetzung dieser Verbindungsstellen mit einem leitfähigen Medium, wie zum Beispiel mit Wasser, kann sich ein sogenanntes elektro-chemisches Lokalelement bilden. Durch das Wasser werden dabei Ionen transportiert, und durch die Feststoffe Elektronen. Bei diesem Korrosionsprozess wird das unedlere Metall aufgelöst. Diese Art der Korrosion kann zu einem Anstieg des Übergangswiderstandes führen aufgrund von Ausbildung von oxidischen Ablagerungen, oder schlimmstenfalls zu einem Ausfall des Batteriesystems durch Auflösung der Verbindung führen. Um dies zu verhindern, kann der erfindungsgemäße Zellverbinder mit einer nicht dargestellten Kunststoffummantelung versiegelt sein. Damit wird ausgeschlossen, dass sich Feuchtigkeit, wie zum Beispiel Kondenswasser, zwischen den einzelnen Schichten und damit in den Verbindungsstellen der Schichten 30, 31 ablagern kann. Dadurch lässt sich effizient und kostengünstig eine Korrosion des Zellverbinders verhindern.

## Patentansprüche

1. Zellverbinder (13) zur elektrischen Verbindung von Terminals (11) von Batteriezellen (10), insbesondere von Lithium-Ionen-Batteriezellen, der wenigstens eine erste Schicht (30) aus einem ersten Material und eine zweite Schicht (31) aus einem zweiten Material umfasst, **dadurch gekennzeichnet, dass** das erste Material mit einem ersten Terminal der zwei Terminals (11) von Batteriezellen (10) stoffschlüssig verbindbar ist und das zweite Material mit einem zweiten Terminal der zwei Terminals (11) von Batteriezellen (10) stoffschlüssig verbindbar ist, die beiden Schichten (30, 31) mit jeweils einem kleineren Loch (40) und einem größeren Loch (41) versehen sind und die Schichten (30, 31) derart übereinander angeordnet sind, dass das kleinere Loch (40) einer Schicht im Wesentlichen koaxial zum größeren Loch (41) der jeweils anderen Schicht angeordnet ist und mittels seiner Lochwandungen jeweils die Lochwandungen zur stoffschlüssigen Befestigung des Zellverbinders (13) an dem mit dem Material der Schicht stoffschlüssig verbindbaren Terminal der zwei Terminals (11) ausbildet.

2. Zellverbinder nach Anspruch 1, der jeweils mehrere Schichten aus dem ersten und dem zweiten Material umfasst.

3. Zellverbinder nach einem der vorhergehenden Ansprüche, bei dem in koaxial angeordneten Löchern eine Buchse (90) eingebracht ist, wobei die Buchse (90) mit dem Material, welches das jeweils kleinere Loch (40) ausbildet, stoffschlüssig verbindbar ist und mittels einer stoffschlüssigen Verbindung elektrisch leitfähig verbunden ist.

4. Zellverbinder nach Anspruch 3, bei dem die Buchse (90) mit dem das kleinere Loch (40) ausbildenden Material pressverschweißt ist.

5. Zellverbinder nach einem der vorhergehenden Ansprüche, der eine isolierende Ummantelung aufweist.

6. Batteriezellenmodul, umfassend eine Mehrzahl von Batteriezellen (10), insbesondere Lithium-Ionen-Batteriezellen sowie wenigstens einen Zellverbinder (13) gemäß einem der Ansprüche 1 bis 5, der Terminals (11) von wenigstens zwei Batteriezellen (10) elektrisch leitfähig verbindet.

7. Batterie, umfassend wenigstens ein Batteriezellenmodul (1) gemäß Anspruch 6.

8. Verfahren zur Herstellung eines zur elektrischen Verbindung von Terminals (11) von Batteriezellen (10) verwendbaren Zellverbinders (13) gemäß einem der Ansprüche 1 bis 5, bei dem eine erste Schicht (30) aus einem ersten Material, das mit einem ersten Terminal der zwei Terminals (11) von Batteriezellen (10) stoffschlüssig verbindbar ist, und eine zweite Schicht (31) aus einem zweiten Material, das mit einem zweiten Terminal der zwei Terminals (11) von Batteriezellen (10) stoffschlüssig verbindbar ist, bereitgestellt wird, die beiden Schichten (30, 31) mit jeweils einem kleineren Loch (40) und einem größeren Loch (41) versehen werden und die Schichten (30, 31) derart übereinander angeordnet werden, dass das kleinere Loch (40) einer Schicht im Wesentlichen koaxial zum größeren Loch (41) der jeweils anderen Schicht angeordnet ist und mittels seiner Lochwandungen, die Lochwandungen zur stoffschlüssigen Befestigung des Zellverbinders (13) an dem mit dem Material der Schicht stoffschlüssig verbindbaren Terminal der zwei Terminals (11) ausbildet.

9. Verfahren zur Herstellung eines Zellverbinders (13) nach Anspruch 8, bei dem eine Buchse (90) in koaxial angeordnete Löcher (40, 41) eingebracht wird, wobei die Buchse (90) mit dem Material, welches das jeweils kleinere Loch (40) ausbildet, stoffschlüssig verbindbar ist und mittels einer stoffschlüssigen Verbindung elektrisch leitfähig verbunden wird.

10. Kraftfahrzeug, insbesondere elektromotorisch angetriebenes Kraftfahrzeug, umfassend wenigstens einen Zellverbinder (13) nach einem der Ansprüche 1 bis 5 und/oder ein Batteriezellenmodul (1) nach Anspruch 6 bzw. eine Batterie nach Anspruch 7, wobei das Batteriezellenmodul (1) bzw. die Batterie mit einem Antriebssystem des Kraftfahrzeuges verbunden ist.

## Claims

1. Cell connector (13) for the electrical connection of terminals (11) of battery cells (10), in particular of lithium-ion battery cells, comprising at least a first layer (30) made of a first material and a second layer (31) made of a second material, **characterized in that** the first material can be connected in a material-bonded manner to a first terminal of the two terminals (11) of battery cells (10) and the second material can be connected in a material-bonded manner to a second terminal of the two terminals (11) of battery cells (10), the two layers (30, 31) are each provided with a smaller hole (40) and a bigger hole (41) and the layers (30, 31) are arranged over one another in such a manner that the smaller hole (40) of one layer is arranged substantially coaxially in relation to the bigger hole (41) of the other layer, respectively, and by means of its hole walls respectively forms the hole walls for the material-bonded fastening of the cell connector (13) to the terminal of the two terminals (11) that can be connected in a material-bonded manner to the material of the layer.

2. Cell connector according to Claim 1, respectively comprising a number of layers of the first material and the second material.

3. Cell connector according to one of the preceding claims, in which a socket (90) is inserted in coaxially arranged holes, wherein the socket (90) can be connected in a material-bonded manner to the material that forms the smaller hole (40), respectively, and is connected in an electrically conductive manner by means of a material-bonded connection.

4. Cell connector according to Claim 3, in which the socket (90) is press-welded to the material forming the smaller hole (40).

5. Cell connector according to one of the preceding claims, having an insulating enclosure.

6. Battery cell module, comprising a plurality of battery cells (10), in particular lithium-ion battery cells, and also at least one cell connector (13) according to one of Claims 1 to 5, which connects terminals (11) of at least two battery cells (10) in an electrically conductive manner.

7. Battery, comprising at least one battery cell module (1) according to Claim 6.

8. Method for producing a cell connector (13) according to one of Claims 1 to 5 that can be used for the electrical connection of terminals (11) of battery cells (10), in which a first layer (30) made of a first material, which can be connected in a material-bonded manner to a first terminal of the two terminals (11) of battery cells (10), and a second layer (31) made of a second material, which can be connected in a material-bonded manner to a second terminal of the two terminals (11) of battery cells (10), are provided, the two layers (30, 31) are each provided with a smaller hole (40) and a bigger hole (41) and the layers (30, 31) are arranged over one another in such a manner that the smaller hole (40) of one layer is arranged substantially coaxially in relation to the bigger hole (41) of the other layer, respectively, and by means of its hole walls respectively forms the hole walls for the material-bonded fastening of the cell connector (13) to the terminal of the two terminals (11) that can be connected in a material-bonded manner to the material of the layer.

9. Method for producing a cell connector (13) according to Claim 8, in which a socket (90) is inserted into coaxially arranged holes (40, 41), wherein the socket (90) can be connected in a material-bonded manner to the material that forms the smaller hole (40), respectively, and can be connected in an electrically conductive manner by means of a material-bonded connection.

10. Motor vehicle, in particular an electromotively driven motor vehicle, comprising at least one cell connector (13) according to one of Claims 1 to 5 and/or a battery cell module (1) according to Claim 6 or a battery according to Claim 7, wherein the battery cell module (1) or the battery is connected to a drive system of the motor vehicle.

## Revendications

1. Connecteur d'éléments (13) pour assurer la connexion électrique de bornes (11) d'éléments de batterie (10), notamment d'éléments de batterie lithium-ion, qui comprend au moins une première couche (30) réalisée dans un premier matériau et une deuxième couche (31) réalisée dans un deuxième matériau, **caractérisé en ce que** le premier matériau peut être relié par complémentarité de matériau à une première borne parmi les deux bornes (11) d'éléments de batterie (10) et le deuxième matériau peut être relié par complémentarité de matériau à une deuxième borne parmi les deux bornes (11) d'éléments de batterie (10), les deux couches (30, 31) sont respectivement pourvues d'un petit trou (40) et d'un grand trou (41) et les couches (30, 31) sont disposées les unes sur les autres de manière à ce que le petit trou (40) d'une couche soit disposé de manière sensiblement coaxiale par rapport au grand trou (41) de l'autre couche respective et forme, au moyen de ses parois de trou, les parois de trou respectives permettant de fixer par complémentarité de matériau le connecteur d'éléments (13) à la borne, parmi les deux bornes (11), pouvant être reliée par complémentarité de matériau au matériau de la couche.

2. Connecteur d'éléments selon la revendication 1, comprenant respectivement plusieurs couches constituées des premier et deuxième matériaux.

3. Connecteur d'éléments selon l'une quelconque des revendications précédentes, dans lequel une douille (90) est insérée dans des trous disposés coaxialement, dans lequel la douille (90) peut être reliée par complémentarité de matériau au matériau qui forme le plus petit trou respectif (40), et est reliée de manière électriquement conductrice au moyen d'une liaison par complémentarité de matériau.

4. Connecteur d'éléments selon la revendication 3, dans lequel la douille (90) est soudée par compression au matériau formant le petit trou (40).

5. Connecteur d'éléments selon l'une quelconque des revendications précédentes, comportant une gaine isolante.

6. Module d'éléments de batterie, comprenant une pluralité d'éléments de batterie (10), notamment des éléments de batterie lithium-ion ainsi qu'au moins un connecteur d'éléments (13) selon l'une quelconque des revendications 1 à 5, qui relie de manière électriquement conductrice des bornes (11) d'au moins deux éléments de batterie (10).

7. Batterie comprenant au moins un module d'éléments de batterie (1) selon la revendication 6.

8. Procédé de fabrication d'un connecteur d'éléments (13) pouvant être utilisé pour connecter électriquement des bornes (11) d'éléments de batterie (10) selon l'une quelconque des revendications 1 à 5, dans lequel il est prévu une première couche (30) réalisée dans un premier matériau, qui peut être relié par complémentarité de matériau à une première borne parmi les deux bornes (11) d'éléments de batterie (10), et une deuxième couche (31) réalisée dans un deuxième matériau qui peut être relié par complémentarité de matériau à une deuxième borne parmi les deux bornes (11) d'éléments de batterie (10), les deux couches (30, 31) sont respectivement pourvues d'un petit trou (40) et d'un grand trou (41) et les couches (30, 31) sont disposées les unes sur les autres de manière à ce que le petit trou (40) d'une couche soit disposé de manière sensiblement coaxiale par rapport au grand trou (41) de l'autre couche respective et forme, au moyen de ses parois de trou, des parois de trou permettant de fixer par complémentarité de matériau le connecteur d'éléments (13) à la borne, parmi les deux bornes (11), pouvant être reliée par complémentarité de matériau au matériau de la couche.

9. Procédé de fabrication d'un connecteur d'éléments (13) selon la revendication 8, dans lequel une douille (90) est insérée dans des trous (40, 41) disposés de manière coaxiale, dans lequel la douille (90) peut être reliée par complémentarité de matériau au matériau qui forme respectivement le petit trou (40) et est reliée de manière électriquement conductrice au moyen d'une liaison par complémentarité de matériau.

10. Véhicule, notamment véhicule entraîné par un moteur électrique, comprenant au moins un connecteur d'éléments (13) selon l'une quelconque des revendications 1 à 5 et/ou un module d'éléments de batterie (1) selon la revendication 6 ou une batterie selon la revendication 7, dans lequel le module d'éléments de batterie (1) ou la batterie est relié au système d'entraînement du véhicule.
